(19) **Europäisches Patentamt / European Patent Office / Office européen des brevets**

(11) **EP 4 172 586 B1**

(12) **FASCICULE DE BREVET EUROPEEN**

(45) Date de publication et mention de la délivrance du brevet:
**08.10.2025 Bulletin 2025/41**

(21) Numéro de dépôt: **21735138.6**

(22) Date de dépôt: **29.06.2021**

(51) Classification Internationale des Brevets (IPC):
*G01M 3/32* (2006.01)    *H01M 10/42* (2006.01)

(52) Classification Coopérative des Brevets (CPC):
**G01M 3/3263; G01M 3/3272; H01M 10/4228;**
H01M 2220/20; Y02E 60/10

(86) Numéro de dépôt international:
**PCT/EP2021/067770**

(87) Numéro de publication internationale:
**WO 2022/002890 (06.01.2022 Gazette 2022/01)**

(54) **METHODE ET SYSTEME DE DETECTION DE FUITES**

LECKDETEKTIONSVERFAHREN UND -SYSTEM

LEAK DETECTION METHOD AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2020 FR 2006778**
           **31.07.2020 FR 2008152**

(43) Date de publication de la demande:
**03.05.2023 Bulletin 2023/18**

(73) Titulaire: **ATEQ**
**78340 Les Clayes-sous-Bois (FR)**

(72) Inventeurs:
• **REGEF, Jean-Luc**
**78340 Les Clayes-sous-Bois (FR)**
• **SERRA, Patrick**
**78340 Les Clayes-sous-Bois (FR)**
• **LEMARTINEL, Christophe**
**78340 Les Clayes-sous-Bois (FR)**
• **BRIGHT, Brian, Donald**
**78340 Les Clayes-sous-Bois (FR)**

(74) Mandataire: **Vidon Brevets & Stratégie**
**16B, rue de Jouanet**
**BP 90333**
**35703 Rennes Cedex 7 (FR)**

(56) Documents cités:
DE-A1- 10 258 017     FR-A1- 2 628 529
FR-A1- 3 068 468     US-A1- 2018 328 812

## Description

[La présente invention se rapporte au domaine des systèmes et méthodes de détection de fuites pour contrôler l'étanchéité d'un objet, plus particulièrement basés sur la mesure d'une grandeur physique relative à un niveau de fuite. Il y a différents systèmes et méthodes pour détecter des fuites, mais dans le cas présent, l'invention concerne plus particulièrement la détection de fuites par variation de pression.

Le document FR2628529 décrit un système de détection de fuite d'une enceinte à l'aide d'un test de pression en tenant compte de l'influence des variations de la pression extérieure à l'enceinte. 1

Lorsqu'on souhaite détecter une fuite par variation de pression, l'objet à tester, dont on veut contrôler le niveau d'étanchéité, subit une variation de pression maitrisée, c'est-à-dire qu'on fait subir une variation de pression connue à un volume interne à l'objet (dite méthode directe) ou à un volume fermé entourant ledit objet (dite méthode indirecte). Puis, après un temps déterminé, on mesure à nouveau la pression dans le volume ayant subi ladite variation de pression. Si l'objet présente une fuite, alors la pression mesurée est différente de la pression initiale.

On mesure généralement une variation de pression pendant un temps donné pour permettre la détermination d'un niveau de fuite relatif à l'objet. En effet, la variation de pression par unité de temps peut être reliée à un niveau de fuite par la relation mathématique suivante :

$$ F = k \ \frac{\Delta P}{\Delta t} \ V $$

dans laquelle, F est la fuite généralement exprimée en centimètres cubes par minute (ou $cm^3$/min), $\Delta P$ est la variation de pression en Pascal (Pa) mesurée dans le volume, $\Delta t$ l'intervalle de temps (en secondes) de la variation de pression mesurée $\Delta P$, V le volume pertinent à considérer (par exemple le volume interne de l'objet) généralement exprimé en centimètres cubes ($cm^3$), et k une constante multiplicative (en $Pa^{-1}$).

Ainsi, quel que soit l'objet ou un sous-élément de l'objet, il est possible de vérifier si celui-ci présente des fuites et de déterminer son niveau d'étanchéité.

L'objet à tester peut-être un appareil électronique, un emballage, un contenant, etc. Les tolérances sur le niveau d'étanchéité peuvent donc être très variables au regard de l'objet à tester, de son volume, de sa forme, de sa fonction...

Cependant, lorsque le niveau de fuite qu'on cherche à déterminer est relativement petit au regard du volume de l'objet à tester, les paramètres environnementaux peuvent rendre difficile la mesure de la variation de pression et/ou sa répétabilité.

En effet, la valeur de la variation de pression relative à la fuite présente alors un ordre de grandeur proche des variations de la pression de l'environnement (généralement la pression atmosphérique), il est alors particulièrement difficile d'obtenir des mesures de fuites fiables et de distinguer une variation de pression liée à une fuite par rapport à une variation liée à l'environnement.

Ce problème est d'autant plus marqué lorsque la détection de fuites s'effectue dans une usine, c'est-à-dire dans un environnement industriel où la température et la pression peuvent varier localement et/ou dans le temps en fonction des opérations réalisées sur les objets à tester ou à proximité dudit système de détection de fuites.

La présente invention trouve une application avantageuse dans le domaine de la détection de fuites pour les batteries électriques pour véhicules électriques automobiles, mais également pour tout objet présentant des problématiques similaires.

En effet, une batterie électrique automobile est ainsi généralement composée de plusieurs modules logés dans un boitier qui est équipé d'un système de refroidissement, d'une carte électronique de gestion, etc.

Ce type de batterie peut présenter des volumes importants, de l'ordre de 100 à 150 litres (ou décimètres cubes), et doit répondre à des critères d'étanchéité stricts, la présence d'eau dans un tel objet pouvant s'avérer catastrophique. Le niveau de fuite d'une batterie doit donc être petit et le contrôle de telles fuites se fait donc dans un ordre de grandeur proche des variations de température et/ou de pression de l'environnement de la batterie. De plus, les batteries, avant d'être montées dans un véhicule, sont testées électriquement et mécaniquement. Les batteries subissent donc des contraintes thermiques et mécaniques qui peuvent affecter un contrôle d'étanchéité ultérieur.

Des recherches et des tests ont donc été réalisés par la titulaire pour proposer une méthode et un système de détection de fuites présentant une sensibilité améliorée et permettant une meilleure répétabilité dans la détection des fuites, tout en améliorant le niveau de détectabilité desdites fuites.

L'invention est ainsi un nouveau système de détection de fuites pour contrôler l'étanchéité d'un objet selon la revendication 1, ledit système comprenant :

- un dispositif de mise sous pression d'un volume ;
- un premier capteur de pression configuré pour mesurer les variations de pression du volume mis sous pression ;
- un deuxième capteur de pression configuré pour mesurer les variations de pression de l'environnement, telle que la pression atmosphérique ;
- une entité électronique configurée pour déterminer une fuite F', F" en fonction des variations de la pression $\Delta P$ dans le volume mis sous pression et des variations de la pression $\Delta P_{ext}$ de l'environnement, lesdites variations $\Delta P$, $\Delta P_{ext}$ étant mesurées sur un intervalle de temps de test prédéterminé $t_{test}$,

respectivement par les premier et deuxième capteurs.

Selon l'invention, les variations de pression $\Delta P$ dans ledit volume sont corrigées en fonction des variations de la pression $\Delta P_{ext}$ de l'environnement.

La correction des variations de pression dudit volume permet d'obtenir une valeur de fuite qui s'approche de la valeur réelle de la fuite de l'objet testé.

Selon une autre caractéristique possible, le premier et/ou le deuxième capteur de pression sont des capteurs de pression différentielle.

Le fait d'utiliser des capteurs de pression différentielle présente les avantages de pouvoir mesurer des variations de pression plus faibles et de supprimer des erreurs de mesure liées au comportement mécanique et/ou thermique de l'objet testé.

Selon une autre caractéristique possible, l'entité électronique et lesdits premier et deuxième capteurs permettent de générer, sur l'intervalle de temps de test $t_{test}$ :

- une courbe des variations de pression $\Delta P$ dans ledit volume ;
- une courbe des variations de pression $\Delta P_{ext}$ de l'environnement.

Selon l'invention, l'entité électronique (15) détermine le niveau de fuite F' de l'objet testé en se basant sur une variation de pression $\Delta P'$ corrigée, ladite variation de pression $\Delta P'$ corrigée étant calculée de la façon suivante :

$$F' = C_1 \Delta P' = C1 (\Delta P - k_S \Delta P_{ext})$$

où $k_S$ est un coefficient de normalisation propre aux premier et deuxième capteurs et $C_1$ est une constante dépendant du temps et du volume de l'objet testé.

Selon une autre caractéristique possible, le coefficient de normalisation $k_S$ est déterminé sur la base de la courbe des variations de pression $\Delta P$ dans ledit volume et de la courbe des variations de pression $\Delta P_{ext}$ de l'environnement, ou préalablement à ladite mesure de la variation de pression $\Delta P$ dans ledit volume et à la mesure de la variation de pression $\Delta P_{ext}$ de l'environnement , la valeur du coefficient de normalisation $k_S$ étant stockée dans une mémoire de l'entité électronique.

Selon une autre caractéristique possible, le système comprend un troisième capteur de pression configuré pour mesurer la pression dans le volume mis sous pression.

Selon un aspect, le troisième capteur peut par exemple être un capteur de pression absolue.

Selon une autre caractéristique possible, ladite entité électronique détermine une variation moyenne de la température par unité de temps de l'objet par l'intermédiaire d'au moins un capteur, ladite variation moyenne de température étant également utilisée pour déterminer la fuite en fonction des variations de la pression dans le volume mis sous pression et des variations la pression de l'environnement.

En effet, si l'objet testé n'est pas à l'équilibre thermique avec son environnement, le fait qu'il capte ou transfert de la chaleur modifie la température du volume et fait donc varier la pression dans ledit volume.

Selon une autre caractéristique possible, l'entité électronique est configurée pour déterminer, via le deuxième ou le troisième capteur, la variation de moyenne de température du volume mis sous pression et/ou de l'objet testé.

Selon une autre caractéristique possible, ladite entité électronique détermine, par l'intermédiaire d'au moins un capteur, une variation de pression $\Delta_T P$ liée à la variation moyenne de température de l'objet par unité de temps, ladite variation de pression $\Delta_T P$ étant également utilisée pour déterminer la fuite F" de l'objet testé en fonction des variations de la pression $\Delta P$ dans le volume mis sous pression et des variations la pression de l'environnement $\Delta P_{ext}$.

Selon une autre caractéristique possible, l'entité électronique détermine le niveau de fuite F" de l'objet testé en fonction de la formule suivante :

$$F'' = C_1 \Delta P'' = C_1 (\Delta P - k_S \Delta P_{ext} - \Delta_T P)$$

où $\Delta P''$ est la variation de pression corrigée de l'objet testé, $\Delta_T P$ la variation de pression dépendant de la variation moyenne de température de l'objet testé durant le temps de test dudit objet, et $C_1$ est une constante dépendant du temps et du volume de l'objet testé.

Selon une autre caractéristique possible, le système comprend une enceinte thermiquement isolée configurée pour accueillir l'objet à tester.

Selon une autre caractéristique possible, l'enceinte thermiquement isolée est réalisée dans d'un matériau présentant une conductivité thermique inférieure à 0,05 $W.m^{-1}.K^{-1}$ à 20°C, préférentiellement inférieure à 0,03 $W.m^{-1}.K^{-1}$ à 20°C, et encore plus avantageusement inférieure à 0,01 $W.m^{-1}.K^{-1}$ à 20°C.

Selon une autre caractéristique possible, ladite enceinte accueillant l'objet à tester comprend une ou plusieurs cavités aptes à accueillir l'objet à tester et un objet de référence.

Selon une autre caractéristique possible, le système comprend un dispositif de ventilation configuré pour brasser le gaz, de préférence inerte, ou de l'air du volume interne de l'enceinte.

Ledit dispositif de ventilation permet notamment d'éviter la création de points chauds et/ou de ponts thermiques entre la ou les enceintes et l'extérieur du dispositif de détection.

L'invention concerne également une méthode de détection de fuites pour le contrôle d'étanchéité d'objet, ladite méthode étant mise en œuvre au sein d'un système (1) de détection de fuites, et comprenant les étapes suivantes :

- mise sous pression d'un volume par un dispositif de mise sous pression ;
- mesure de la variation de la pression du volume sous pression par un premier capteur de pression ;
- mesure des variations de la pression de l'environnement par un deuxième capteur ;
- détermination et détection d'une fuite en fonction des variations de la pression du volume sous pression et des variations de la pression de l'environnement.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :

- la figure 1, référencée [Fig. 1], est une représentation très schématique d'un système de détection de fuites selon l'invention ;
- la figure 1a, référencée [Fig. 1a], qui est une vue schématique et agrandie d'un capteur de pression du système de la figure 1 ;
- la figure 2, référencée [Fig. 2], est une vue schématique en perspective du système de la figure 1 pour contrôler l'étanchéité d'un objet, lorsque l'objet est une batterie électrique pour véhicule automobile électrique ;
- la figure 3, référencée [Fig. 3], est un logigramme représentant les étapes de la méthode de détection de fuites selon l'invention ;
- la figure 4, référencée [Fig. 4], est un graphique de la variation de pression dans le volume lors de différentes étapes de la méthode de la figure 3 ;
- la figure 5, référencée [Fig. 5], est un graphique représentant, sous forme de courbes, un exemple de variations de pression dans un volume relatif à l'objet testé et à l'environnement lors d'un contrôle d'étanchéité de l'objet ;
- la figure 6, référencée [Fig. 6], est une courbe de la variation de pression d'un volume relatif à l'objet testé déterminée à partir des courbes de la figure 5.

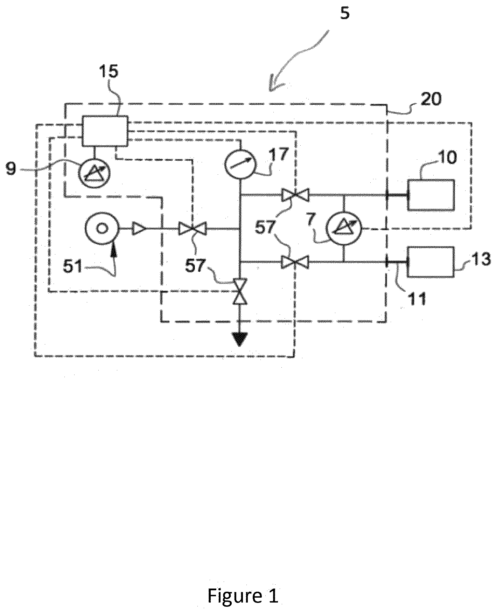

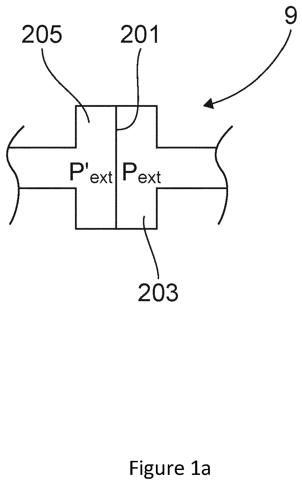

La [Fig. 1] est ainsi une représentation très schématique d'un système de détection de fuites pour contrôler l'étanchéité d'un objet 10, dans l'exemple décrit ci-après l'objet testé est une batterie électrique pour un véhicule automobile, mais peut être n'importe quel objet dont l'étanchéité doit être contrôlée et dont le niveau de fuites qu'on cherche à détecter est de l'ordre de grandeur des perturbations liées à l'environnement dudit système.

Ledit système comprend ainsi:

- un dispositif 5 de mise sous pression d'un volume relatif à l'objet 10 testé, tel que le volume caractéristique de la batterie électrique 10, c'est-à-dire que cela peut être un volume interne à la batterie (méthode directe) ou un volume fermé entourant la batterie (méthode indirecte) ;

- un premier capteur de pression 7 configuré pour mesurer les variations de pression dudit volume caractéristique permettant de contrôler l'étanchéité de la batterie 10 ;
- un deuxième capteur de pression 9 configuré pour mesurer les variations de pression de l'environnement , généralement la pression atmosphérique ;
- un troisième capteur de pression 17, qui est un capteur facultatif, configuré pour mesurer la pression appliquée dans ledit volume caractéristique par ledit dispositif 5 ;
- des connexions aérauliques 11 configurées pour relier le dispositif 5 de mise sous pression à l'objet 10 et à une référence 13 ;
- une entité électronique 15, telle qu'un circuit électronique, reliée aux différents capteurs 7, 9, 17 de pression et configurée pour récupérer les valeurs de pression mesurées par un ou plusieurs desdits capteurs 7, 9 et 17.

Les premier et deuxième capteurs 7 et 9 de pression sont préférentiellement des capteurs de pression différentielle. Tandis que le troisième capteur 17 est avantageusement un capteur de pression absolue.

On notera qu'un capteur de pression différentielle est par exemple un capteur comportant une membrane où chaque face de la membrane est exposée à une pression, le déplacement de la membrane (mesuré par exemple par effet capacitif) permettant de mesurer la différence de pression de chaque côté de la membrane.

La [Fig. 1a] est une vue très schématique du deuxième capteur 9 de pression différentielle configuré pour mesurer les variations de pression de l'environnement, telle que la pression atmosphérique.

Plus particulièrement, le capteur 9 comprend une membrane 201 dont chaque face est située dans une cavité 203, 205 distinctes. Chacune des cavités 203, 205 du capteur 9 communique avec l'extérieur (ici l'atmosphère), cependant l'une des cavités 205 est configurée pour filtrer les variations rapides de pression pouvant subvenir dans cet environnement, ainsi on peut définir des valeurs de pression $P_{ext}$ et $P'_{ext}$ régnant des chacune des cavités 203, 206 dont la différence permet d'obtenir les variations de pression de l'environnement $\Delta P_{ext}$.

De même, dans le présent exemple, la détection de fuites se fait grâce à une référence 13, mais cette dernière peut être :

- une pièce de référence (c'est-à-dire le même objet présentant le niveau d'étanchéité requis), dans ce cas la mesure d'une variation de pression s'effectue entre une pièce de test et une pièce référence ;
- un bouchon, la mesure d'une variation de pression entre une pièce test et un bouchon côté référence ;

- un autre objet similaire à tester, on a donc le test de deux pièces à la fois, une au côté test, l'autre au côté référence.

Plus particulièrement, le dispositif 5 comprend :

- une alimentation 51 en air comprimé ;
- un circuit aéraulique comportant une pluralité de vannes 57 et qui est, d'une part, relié à l'alimentation 51 et, d'autre part, est configuré pour réguler l'alimentation en air comprimé des différentes parties du circuit aéraulique, c'est à dire d'au moins un desdits capteurs 7, 17 et/ou au moins un volume caractéristique de l'objet 10 à tester et de la référence 13 (via les connexions aérauliques 11).

Généralement, le dispositif 5 et ses éléments 51, 57, l'entité électronique 15, ainsi que les différents capteurs 7, 9 et 17 sont disposés à l'intérieur d'un boitier 20. Mais, les différents éléments, tels que le capteur 9, peuvent être déportés et disposés à l'extérieur du boitier 20.

Ladite entité électronique 15 est également reliée auxdites vannes 57, afin de commander lesdites vannes 57 lors des différentes étapes nécessaires au contrôle de l'étanchéité de l'objet 10.

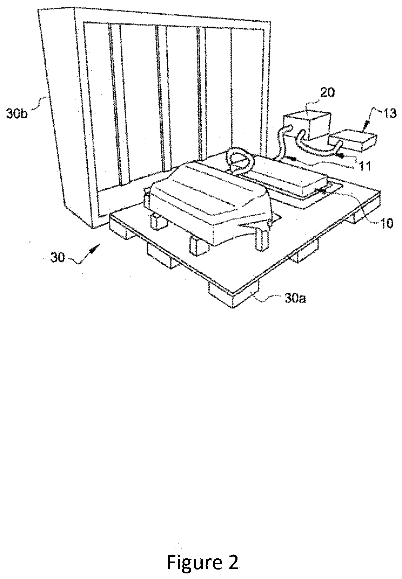

La [Fig. 2], quant à elle, est une vue schématique en perspective du système de la [Fig. 1] utilisé pour le contrôler d'étanchéité d'une batterie électrique 10.

Ainsi, ledit système 1 comprend en outre une enceinte 30 comprenant un socle 30a et un couvercle 30b. Le socle 30a est configuré pour accueillir la batterie 10 et le couvercle 30b pour recouvrir ladite batterie 10 afin de limiter les influences environnementales lors de la détection de fuites.

Pour cela, ladite enceinte 30 peut être réalisée dans un matériau présentant une conductivité thermique inférieure à 0,05 W.m$^{-1}$.K$^{-1}$ à 20°C, préférentiellement inférieure à 0,03 W.m$^{-1}$.K$^{-1}$ à 20°C, et encore plus avantageusement inférieure à 0,01 W.m$^{-1}$.K$^{-1}$ à 20°C.

Dans une variante de réalisation non représentée, ladite enceinte 30 comprend une ou plusieurs cavités aptes à accueillir l'objet à tester 10 et la référence 13. Dans une autre variante de réalisation non représentée, le système 1 comprend un dispositif de ventilation configuré pour brasser le gaz, de préférence inerte, ou de l'air du volume interne de l'enceinte 30.

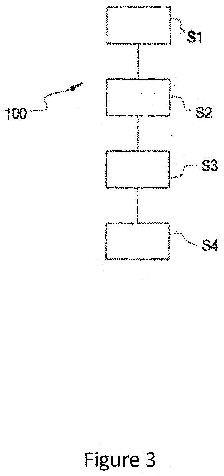

Ainsi, comme illustré à la [Fig. 3], lorsqu'on souhaite contrôler l'étanchéité d'un objet 10, tel qu'une batterie, ledit système 1 réalise la méthode 100 suivante :

- mise sous pression S1 d'un volume caractéristique de l'objet 10, par exemple le volume interne de la batterie, par l'intermédiaire du dispositif 5 de mise sous pression ;
- mesure de la variation de la pression S2 du volume de l'objet 10 sous pression par le premier capteur de pression 7 ;

- mesure des variations de la pression de l'environnement S3 par le deuxième capteur 9 ;
- détection d'une fuite S4 en fonction des variations de la pression du volume sous pression $\Delta P$ et des variations de la pression de l'environnement $\Delta P_{ext}$ (ici la pression atmosphérique).

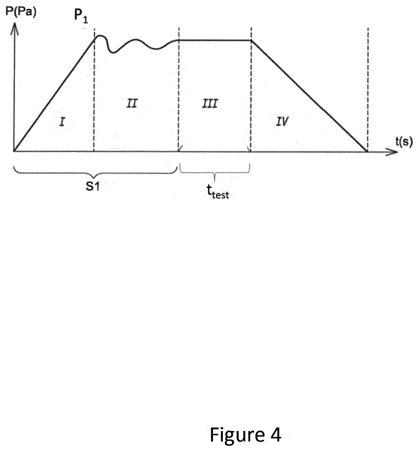

On notera que certaines des étapes de la méthode 100 s'inscrivent dans une méthode de gestion aéraulique de détection de fuites qui peut être scindée en quatre phases, plus particulièrement illustrée à la [Fig. 4] :

- une phase de remplissage I du volume par de l'air comprimé, la pression augmente jusqu'à une valeur de pression P1 souhaitée ;
- une étape de stabilisation II, après avoir mis le volume sous pression, on attend que celui-ci revienne à l'équilibre thermique et mécanique, afin que des phénomènes ne viennent pas perturber la mesure de de la fuite, on notera que les phases de remplissage et de stabilisation I et II correspondent à l'étape de mise sous pression S1 ;
- une phase de test III, pendant laquelle on mesure les variations de pression dans le volume mis sous pression et les variations de la pression de l'environnement pendant un temps de test $t_{test}$ prédéterminé (la phase de test III correspond donc aux étapes S2 et S3 ci-dessus) ;
- une phase de vidage IV, pendant laquelle on ramène à pression atmosphérique le volume mis sous pression.

Les différentes étapes et phases décrites ci-dessous sont commandées par l'entité électronique 15 qui gère l'ouverture et la fermeture des différentes vannes 57 en conséquence.

De plus, ladite entité électronique 15 est configurée pour déterminer une fuite F' et F" en fonction des variations de la pression dans le volume $\Delta P$ mis sous pression et des variations la pression de l'environnement $\Delta P_{ext}$, lesdites variations $\Delta P$, $\Delta P_{ext}$ étant mesurées, sur un intervalle de temps $t_{test}$ prédéterminé, par les premier et deuxième capteurs 7 et 9.

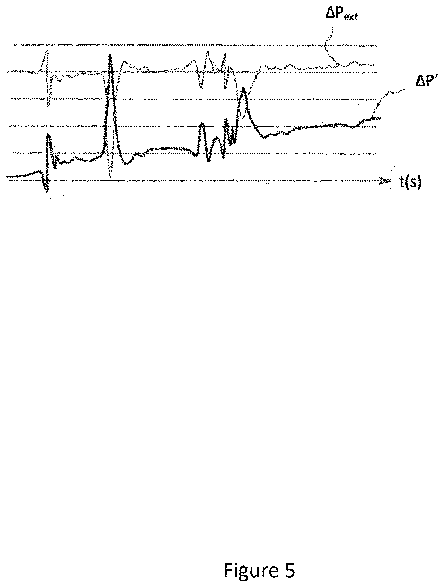

La [Fig. 5] illustre sous forme de courbes, un exemple de valeurs de pression mesurées par les premier et deuxième capteurs 7 et 9. On y observe donc une courbe illustrant la variation dans le volume mis sous pression $\Delta P$ et une autre courbe illustrant la variation de la pression de l'environnement $\Delta P_{ext}$ sur le temps de test $t_{test}$. Lesdites courbes sont générées par l'intermédiaire de l'entité électronique et les premier et deuxième capteurs 7 et 9.

L'entité électronique 15 est donc configurée pour corriger la courbe $\Delta P$ par la courbe $\Delta P_{ext}$, afin d'obtenir une variation de pression corrigée $\Delta P'$ qui ne soit plus influencée par l'environnement (variations de pression et/ou de température issues de l'environnement).

Plus particulièrement, ladite variation de pression corrigée ΔP' est calculée de la façon suivante :

$$\Delta P' = (\Delta P - k_S \, \Delta P_{ext})$$

où $k_S$ est un coefficient de normalisation propre aux capteurs 7 et 9 permettant de soustraite les valeurs de chacune des courbes l'une par rapport à l'autre.

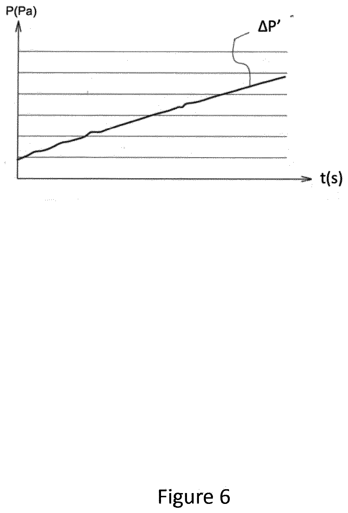

Un exemple de courbe de pression corrigée ΔP' basée sur les courbes de la [Fig. 5] est illustré à la [Fig. 6].

Ledit coefficient de normalisation $k_S$ est par exemple :

- déterminé sur la base des courbes ΔP, $\Delta P_{ext}$ de mesure, par exemple en faisant le rapport de valeurs extrémales ;
- déterminé au préalable et sa valeur est stockée dans une mémoire de l'entité électronique 15.

Ainsi, l'entité électronique 15 détermine le niveau de fuite F' aussi appelé niveau de fuite corrigé à partir des variations de pression corrigées ΔP', ceci selon la formule suivante :

$$F' = k \, \frac{\Delta P'}{\Delta t} \, V = \, C_1 \, \Delta P'$$

où $C_1$ est une constante dépendant du temps (par exemple du temps de test $t_{test}$) et du volume V de l'objet testé (c'est dire le volume de l'objet dont on cherche à déterminer le niveau d'étanchéité).

En fonction de la valeur de la fuite F', et selon le seuil requis, l'entité électronique 15 indique la conformité ou non de l'objet testé.

Dans une variante de réalisation, ladite entité électronique 15 détermine une variation moyenne de la température par unité de temps de l'objet testé, ceci par l'intermédiaire d'au moins un capteur, par exemple le deuxième ou le troisième capteur 9, 17.

Ladite variation moyenne de température est alors utilisée pour déterminer une fuite corrigée F" en fonction des variations de la pression ΔP mesurée dans le volume mis sous pression et des variations la pression $\Delta P_{ext}$ de l'environnement.

Plus particulièrement, lors d'une étape préalable au test, le deuxième 9 ou le troisième 17 capteur est configuré pour mesurer une variation de pression $\Delta_T P$ (en Pa/s) dépendant de la variation moyenne de température de l'objet par unité de temps.

Cette mesure peut par exemple s'effectuer lors d'une étape préalable au remplissage ou lors de la phase de stabilisation, mais il est nécessaire que l'objet à tester et/ou la référence soient isolés de l'extérieur.

L'entité électronique 15 détermine alors une variation de pression corrigée ΔP" du volume caractéristique de l'objet testé en fonction de la formule suivante :

$$\Delta P'' = \Delta P - k_S \, \Delta P_{ext} - \Delta_T P$$

Puis, comme précédemment, l'entité électronique 15 calcule un niveau de fuite corrigé F" en se basant sur ΔP" selon l'équation précédente.

## Revendications

**1.** Système (1) de détection de fuites pour contrôler l'étanchéité d'un objet, ledit système (1) comprenant :

- un dispositif (5) de mise sous pression d'un volume ;
- un premier capteur (7) de pression configuré pour mesurer les variations de pression du volume mis sous pression ;
- un deuxième capteur (9) de pression configuré pour mesurer les variations de pression de l'environnement, tel que la pression atmosphérique ;
- une entité électronique (15) configurée pour déterminer une fuite F', F" en fonction des variations de la pression ΔP dans le volume mis sous pression et des variations de la pression $\Delta P_{ext}$ de l'environnement, lesdites variations ΔP, $\Delta P_{ext}$ étant mesurées sur un intervalle de temps de test prédéterminé $t_{test}$, respectivement par les premier (7) et deuxième (9) capteurs, lesdites variations de pression ΔP dans ledit volume sont corrigées en fonction desdites variations de la pression $\Delta P_{ext}$ de l'environnement, **caractérisé en ce que** l'entité électronique (15) détermine le niveau de fuite F' de l'objet testé en se basant sur une variation de pression ΔP' corrigée, ladite variation de pression ΔP' corrigée étant calculée de la façon suivante :

$$F' = C_1 \, \Delta P' = C_1 \, (\Delta P - k_S \, \Delta P_{ext})$$

où $k_S$ est un coefficient de normalisation propre auxdits premier (7) et deuxième capteurs (9), et $C_1$ est une constante dépendant du temps et du volume de l'objet testé.

**2.** Système selon la revendication 1, **caractérisé en ce que** le premier capteur (7) et/ou le deuxième capteur (9) de pression sont des capteurs de pression différentielle.

**3.** Système selon l'une quelconque des revendications précédentes, l'entité électronique (15) et lesdits premier (7) et deuxième capteurs (9) permettant de générer, sur l'intervalle de temps de test $t_{test}$ :

- une courbe des variations de pression ΔP dans ledit volume ;
- une courbe des variations de pression $\Delta P_{ext}$ de l'environnement.

4. Système selon la revendication précédente, **caractérisé en ce que** le coefficient de normalisation $k_S$ est déterminé :

- sur la base de la courbe des variations de pression $\Delta P$ dans ledit volume et de la courbe des variations de pression $\Delta P_{ext}$ de l'environnement, ou - préalablement à ladite mesure de la variation de pression $\Delta P$ dans ledit volume et de la mesure de la variation de pression $\Delta P_{ext}$ de l'environnement, la valeur dudit coefficient de normalisation $k_S$ étant stockée dans une mémoire de l'entité électronique (15).

5. Système selon l'une quelconque des revendications précédentes, **caractérisé en ce qu'**il comprend un troisième capteur (17) de pression configuré pour mesurer la pression P dans le volume mis sous pression.

6. Système selon l'une quelconque des revendications précédentes, caractérisé en ce ladite entité électronique (15) détermine, par l'intermédiaire d'au moins un capteur, une variation de pression $\Delta_T P$ liée à une variation moyenne de température de l'objet par unité de temps, ladite variation de pression $\Delta_T P$ étant également utilisée pour déterminer la fuite F" de l'objet testé en fonction des variations de la pression $\Delta P$ dans le volume mis sous pression et des variations la pression de l'environnement $\Delta P_{ext}$.

7. Système selon la revendication précédente, l'entité électronique (15) déterminant le niveau de fuite F" de l'objet testé en fonction de la formule suivante :

$$F''=C_1\Delta P''=C_1(\Delta P-k_S\Delta P_{ext}-\Delta_T P)$$

où $\Delta P''$ est la variation de pression corrigée de l'objet testé, $\Delta_T P$ la variation de pression dépendant de la variation moyenne de température de l'objet testé durant le temps de test dudit objet, et $C_1$ est une constante dépendant du temps et du volume de l'objet testé.

8. Système selon l'une quelconque des revendications précédentes, **caractérisé en ce qu'**il comprend une enceinte thermiquement isolée configurée pour accueillir l'objet à tester.

9. Méthode (100) de détection de fuites mise en œuvre au sein d'un système (1) de détection de fuites selon l'une des revendications 1 à 8, ladite méthode comprenant les étapes suivantes:

- mise sous pression (S1) d'un volume par un dispositif (5) de mise sous pression ;
- mesure de la variation de la pression (S2) du volume sous pression par un premier capteur (7) de pression ;
- mesure des variations de la pression de l'environnement (S3) par un deuxième capteur (9) ;
- détection d'une fuite (S4) en fonction des variations de la pression du volume sous pression $\Delta P$ et des variations de la pression de l'environnement $\Delta P_{ext.}$,
- correction desdites variations de pression $\Delta P$ dans ledit volume en fonction desdites variations de la pression $\Delta P_{ext}$ de l'environnement,
- détermination par l'entité électronique (15) du niveau de fuite F' de l'objet testé en se basant sur une variation de pression $\Delta P'$ corrigée, ladite variation de pression $\Delta P'$ corrigée étant calculée de la façon suivante :

$$F'=C_1\Delta P'=C_1(\Delta P-k_S\Delta P_{ext})$$

où $k_S$ est un coefficient de normalisation propre auxdits premier (7) et deuxième capteurs (9), et $C_1$ est une constante dépendant du temps et du volume de l'objet testé.

**Patentansprüche**

1. Lecksuchsystem (1) zur Kontrolle der Dichtigkeit eines Objekts, wobei das System (1) umfasst:

- eine Vorrichtung (5) zur Druckbeaufschlagung eines Volumens;
- einen ersten Drucksensor (7), der dazu eingerichtet ist, um die Druckänderungen des unter Druck gesetzten Volumens zu messen;
- einen zweiten Drucksensor (9), der dazu eingerichtet ist, um Änderungen des Umgebungsdrucks, wie beispielsweise den Luftdruck, zu messen;
- eine elektronische Einheit (15), die dazu eingerichtet ist, dass sie eine Leckage F', F" als Funktion der Änderungen des Drucks $\Delta P$ in dem druckbeaufschlagten Volumen und der Änderungen des Umgebungsdrucks $\Delta P_{ext}$ feststellt, wobei die Änderungen $\Delta P$, $\Delta P_{ext}$ über ein vorbestimmtes Testzeitintervall $t_{test}$ jeweils von dem ersten (7) und dem zweiten (9) Sensor gemessen werden, wobei die Druckänderungen $\Delta P$ in dem Volumen entsprechend den Änderungen des Umgebungsdrucks $\Delta P_{ext}$ korrigiert werden, **dadurch gekennzeichnet, dass** die elektronische Einheit (15) das Niveau der Leckage F' des getesteten Objekts auf der Grundlage einer kor-

rigierten Druckänderung ∆P' bestimmt, wobei die korrigierte Druckänderung ∆P' wie folgt berechnet wird:

$$F'=C_1\Delta P' = C_1(\Delta P - k_s\Delta P_{ext})$$

wobei $k_s$ ein Normalisierungskoeffizient ist, der dem ersten (7) und zweiten (9) Sensor zu eigen ist, und $C_1$ eine Konstante ist, die von der Zeit und dem Volumen des getesteten Objekts abhängt.

2. System nach Anspruch 1, **dadurch gekennzeichnet, dass** der erste Drucksensor (7) und/oder der zweite Drucksensor (9) Differenzdrucksensoren sind.

3. System nach einem der vorhergehenden Ansprüche, wobei die elektronische Einheit (15) und der erste (7) und der zweite (9) Drucksensor es gestatten, über das Testzeitintervall $t_{test}$,

   - eine Kurve der Druckänderungen ∆P in dem Volumen;
   - eine Kurve der Druckänderungen $\Delta P_{ext}$ der Umgebung

   zu erzeugen.

4. System nach dem vorhergehenden Anspruch, **dadurch gekennzeichnet, dass** der Normalisierungskoeffizient $k_s$ bestimmt wird:

   - auf der Grundlage der Kurve der Druckänderungen ∆P in dem Volumen und der Kurve der Druckänderungen $\Delta P_{ext}$ der Umgebung, oder - vor der Messung der Druckänderung ∆P in dem Volumen und der Messung der Druckänderung $\Delta P_{ext}$ der Umgebung, wird der Wert des Normalisierungskoeffizienten $k_s$ in einem Speicher der elektronischen Einheit (15) gespeichert.

5. System nach einem der vorhergehenden Ansprüche, **dadurch gekennzeichnet, dass** es einen dritten Drucksensor (17) umfasst, der dazu eingerichtet ist, um den Druck P in dem druckbeaufschlagten Volumen zu messen.

6. System nach einem der vorhergehenden Ansprüche, **dadurch gekennzeichnet, dass** die elektronische Einheit (15) mittels mindestens eines Sensors eine Druckänderung $\Delta_T P$ ermittelt, die mit einer durchschnittlichen Temperaturänderung des Objekts pro Zeiteinheit verknüpft ist, wobei die Druckänderung $\Delta_T P$ auch dazu verwendet wird, um die Leckage F" des getesteten Objekts als Funktion der Änderungen des Drucks ∆P in dem druckbeaufschlagten Volumen und der Druckänderungen der

Umgebung $\Delta P_{ext}$ zu bestimmen.

7. System nach dem vorhergehenden Anspruch, wobei die elektronische Einheit (15) das Niveau der Leckage F" des getesteten Objekts gemäß der folgenden Formel bestimmt

$$F''=C_1\Delta P'' = C_1(\Delta P - k_s\Delta P_{ext} - \Delta_T P),$$

wobei ∆P" die korrigierte Druckänderung des getesteten Objekts, $\Delta_T P$ die Änderung des Drucks ist, die von der durchschnittlichen Temperaturänderung des getesteten Objekts während der Testdauer abhängt, und $C_1$ eine Konstante ist, die von der Zeit und dem Volumen des getesteten Objekts abhängt.

8. System nach einem der vorhergehenden Ansprüche, **dadurch gekennzeichnet, dass** es eine thermisch isolierte Kammer umfasst, die dazu eingerichtet ist, um das zu testende Objekt aufzunehmen.

9. Verfahren (100) zur Lecksuche, das in einem Lecksuchsystem (1) nach einem der Ansprüche 1 bis 8 implementiert ist, wobei das Verfahren die folgenden Schritte umfasst:

   - Druckbeaufschlagung (S1) eines Volumens mittels einer Druckbeaufschlagungsvorrichtung (5);
   - Messen der Druckänderung (S2) des unter Druck stehenden Volumens mittels eines ersten Drucksensors (7);
   - Messung von Änderungen des Umgebungsdrucks (S3) durch einen zweiten Drucksensor (9);
   - Erkennung einer Leckage (S4) als Funktion der Druckänderungen ∆P in dem unter Druck stehenden Volumen und der Änderungen des Umgebungsdrucks $\Delta P_{ext}$,
   - Korrektur der Druckänderungen ∆P in dem Volumen in Abhängigkeit von den Änderungen des Umgebungsdrucks $\Delta P_{ext}$,
   - Bestimmung des Niveaus der Leckage F' des getesteten Objekts durch die elektronische Einheit (15) auf der Grundlage einer korrigierten Druckänderung ∆P', wobei die korrigierte Druckänderung ∆P' wie folgt berechnet wird

$$F'=C_1\Delta P' = C_1(\Delta P - k_s\Delta P_{ext})$$

wobei $k_s$ ein Normalisierungskoeffizient ist, der dem ersten (7) und zweiten (9) Sensor zu eigen ist, und $C_1$ eine Konstante ist, die von der Zeit und dem Volumen des getesteten Objekts abhängt.

**Claims**

1. A leak detection system (1) for checking the tightness of an object, said system (1) including:

   - a device (5) for pressurizing a space;
   - a first pressure sensor (7) configured to measure pressure variations of the pressurized space;
   - a second pressure sensor (9) configured to measure pressure variations of the environment, such as atmospheric pressure;
   - an electronic entity (15) configured to determine a leak F', F" depending on the pressure variations $\Delta P$ in the pressurized space and the pressure variations $\Delta P_{ext}$ of the environment, said variations $\Delta P$, $\Delta P_{ext}$ being measured over a predetermined test time interval ttest, respectively by the first (7) and second (9) sensors.
   said pressure variations $\Delta P$ in said space are corrected depending on said pressure variations $\Delta P_{ext}$ of the environment,
   **characterized in that** the electronic entity (15) determines the level of leak F' of the tested object based on a corrected pressure variation $\Delta P'$, said corrected pressure variation $\Delta P'$ being calculated as follows:

$$F' = C_1 \, \Delta P' = C_1 \, (\Delta P - k_S \, \Delta P_{ext})$$

   where $k_S$ is a normalization coefficient specific to said first (7) and second (9) sensors, and $C_1$ is a constant depending on the time and space of the tested object.

2. The system according to claim 1 or 2, **characterized in that** the first pressure sensor (7) and/or the second pressure sensor (9) are differential pressure sensors.

3. The system according to any of the preceding claims, the electronic entity (15) and said first (7) and second (9) sensors making it possible to generate, over the test time interval $t_{test}$:

   - a curve of the pressure variations $\Delta P$ in said space;
   - a curve of the pressure variations $\Delta P_{ext}$ of the environment.

4. The system according to the preceding claim, **characterized in that** the normalization coefficient $k_S$ is determined:

   - based on the curve of the pressure variations $\Delta P$ in said space and the curve of the pressure variations $\Delta P_{ext}$ of the environment, or

   - prior to said measurement of the pressure variation $\Delta P$ in said space and

   the measurement of the pressure variation $\Delta P_{ext}$ of the environment, the value of said normalization coefficient $k_S$ being stored in a memory of the electronic entity (15).

5. The system according to any of the preceding claims, **characterized in that** it includes a third pressure sensor (17) configured to measure the pressure P in the pressurized space.

6. The system according to any of the preceding claims, **characterized in that** said electronic entity (15) determines, through at least one sensor, a pressure variation $\Delta_T P$ related to an average temperature variation of the object per unit of time, said pressure variation $\Delta_T P$ being also used to determine the leak F" of the tested object depending on the pressure variations $\Delta P$ in the pressurized space and the pressure variations of the environment $\Delta P_{ext}$.

7. The system according to the preceding claim, the electronic entity (15) determining the level of leak F" of the tested object depending on the following formula:

$$F'' = C_1 \, \Delta P'' = C_1 \, (\Delta P - k_S \, \Delta P_{ext} - \Delta_T P)$$

   where $\Delta P''$ is the corrected pressure variation of the tested object, $\Delta_T P$ is the pressure variation depending on the average temperature variation of the tested object during the test time of said object, and $C_1$ is a constant depending on the time and space of the tested object.

8. The system according to any of the preceding claims, **characterized in that** it includes a thermally insulated enclosure configured to accommodate the object to be tested.

9. A leak detection method (100) implemented within a leak detection system (1) according to one of claims 1 to 8, said method including the following steps:

   - pressurizing (S1) a space by a pressurizing device (5);
   - measuring the pressure variation (S2) of the pressurized space by a first pressure sensor (7);
   - measuring the pressure variations of the environment (S3) by a second sensor (9);
   - detecting a leak (S4) depending on the pressure variations of the pressurized space $\Delta P$ and the pressure variations of the environment $\Delta P_{ext}$;
   - determination by the electronic entity (15) of the level of leak F' of the tested object based on a corrected pressure variation ΔP', said corrected pressure variation ΔP' being calculated as follows:

$$F' = C_1 \, \Delta P' = C_1 \, (\Delta P - k_S \, \Delta P_{ext})$$

where $k_S$ is a normalization coefficient specific to said first (7) and second (9) sensors, and $C_1$ is a constant depending on the time and space of the tested object.

Figure 1

Figure 1a

Figure 2

Figure 3

Figure 4

Figure 5

Figure 6

## RÉFÉRENCES CITÉES DANS LA DESCRIPTION

**Documents brevets cités dans la description**

- FR 2628529